# EUROPEAN PATENT APPLICATION

(11) **EP 1 190 814 A1**
(43) Date of publication of application: **27.03.2002**
(21) Application number: 01121461.6
(22) Date of filing: 07.09.2001
(51) Int. Cl.: B23Q 11/10, B23B 29/04

(54) **Machining method and mist supplying apparatus for use in the method**

(30) Priority: 07.09.2000 JP 2000272204; 28.08.2001 JP 2001257997
(71) Applicant: ECOREG LTD., Osaka-shi, Osaka 531-0072 (JP)
(72) Inventor: Hara, Mitsugu, Osaka 596-0827 (JP)
(74) Representative: Frankland, Nigel Howard

(57) **Abstract**

A machining method for a workpiece with a lathe device, wherein compressed air and liquid are individually supplied to the interior of a turret. After the compressed air and the liquid are separately passed through the interior of the turret, they are separately supplied to the interior of a tool holding means fixed to the turret. At the interior of the tool holding means, the compressed air and the liquid are mixed and atomized to form a mist. Atomized mist is then delivered to a tip of a working tool for machining, either along the outer surface or within the interior of the working tool, and is sprayed onto a working part from the tip of the working tool. The machining method does not cause problems such as hardening, like quenching, of a surface of the workpiece with generated cutting heat even during high-speed cutting.

## Description

### BACKGROUND OF THE INVENTION

### Field of the Invention

The present invention relates to a method for machining a workpiece, such as cutting and grinding a workpiece, and a mist supplying apparatus for use therein.

### Description of the Art

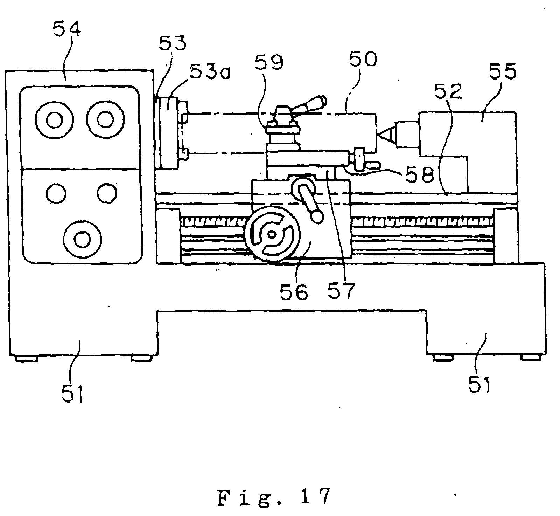

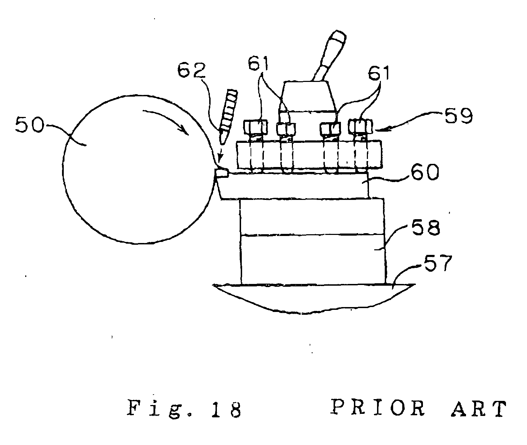

conventionally, a lathe device shown in FIG. 17 has been generally used for machining a workpiece. The lathe device includes a main spindle 53 which has, over a bed 52 having right and left legs 51, a holding part 53a for holding and fixing one end of a workpiece 50; a main spindle base 54 having built therein a rotation driving means for rotating the main spindle 53 at high speed; and a tailsiock 55 which faces the main spindle base 54 and supports the other end of the workpiece 50. Moreover, the lathe device includes a reciprocating base 56 arranged to shift the bed 52 in a right to left direction (in other words, vertical direction), and a cross slide 57 mounted thereon to shift the bed 52 in a front to back direction (in other words, horizontal direction). A tool post 59 is mounted on the cross slide 57 by a tool slide 58, and a cutting tool 60, as shown in FIG. 18, is fastened to the tool post 59 with bolts 61.

In operation of this lathe device, a knife edge of the cutting tool 60 is pressed against the outer surface of the workpiece 50 which is supported between the main spindle 53 and the tailstock 55. While cutting oil is supplied thereto from a cutting oil supply pipe 62 (see FIG. 18), the workpiece 50 is rotated at high speed during cutting by the cutting tool 60.

However, the above-mentioned conventional lathe device has various problems including the surface of the workpiece 50 becoming hard, as if being quenched, due to cutting heat generated when the cutting speed is high, and the like. Thus, it has been difficult to carry out high-speed cutting with a conventional lathe device.

### SUMMARY OF THE INVENTION

Accordingly, under this circumstance, it is an object of the present invention to provide a machining method which does not generate heat at a working part even when a lathe device is driven at high speed and which thereby prevents conventional problems such as hardening, as if quenching, the surface of a workpiece due to generated cutting heat, and the like; and a mist supplying apparatus for use in the method.

In order to achieve the above object, a machining method according to a first aspect of the present invention includes the steps of: separately supplying compressed air and liquid to the interior of a tool post of a lathe device when a workpiece is being machined with the lathe device; individually passing the compressed air and the liquid through the interior of the tool post and then separately supplying the compressed air and the liquid to the interior of a tool holding means fixed to the tool post; mixing and then atomizing the compressed air and the liquid inside the tool holding means; delivering atomized mist to a tip of a tool along the outer surface or within the interior of the tool; and spraying the mist from the tip of the tool to a working post of the workpiece being machined. A mist supplying apparatus for a lathe device according to a second aspect of the present invention includes a tool post, a tool holding means fixed to the tool post, and a tool which is detachably fixed to the tool holding means. The tool post internally and individually has a compressed air passage for receiving compressed air from a compressed air supplying means, and a liquid passage for receiving liquid from a liquid supplying means. The tool holding means internally and individually has a first communication path linked to the compressed air passage, a second communication path linked to the liquid passage, and a convergence path into which both communication paths converge. At the convergence path, liquid from the second communication path is atomized by compressed air that is injected from the second communication path. Atomized mist is delivered to a tip of a tool along the outer surface or within the interior of the tool, and is then sprayed from the tip of the tool.

In other words, the machining method of the present invention is a machining method for use with a lathe device. In machining a workpiece with the lathe device, compressed air and liquid are separately supplied to the interior of a tool post, and are individually passed through the interior of the tool post. Then, the compressed air and the liquid are separately supplied to the interior of a tool holding means that is fixed to the tool post. The compressed air and the liquid are mixed and then atomized inside the tool holding means so as to form a mist. The mist is delivered to a tip of a tool along the outer surface or through the interior of the tool and is injected from the tip of the tool to a working part for machining. Therefore, when liquid is supplied to the working part in an atomized condition, the mist can be projected evenly to a narrow space of the working part, and the like and heating at the working part can be significantly reduced or even prevented. Thus, even high-speed machining does not generate heat at the working part. Accordingly, a tool for a machining center can be used for high-speed machining in a lathe device. On the other hand, the mist supplying apparatus of the present invention is also a device used with a lathe device. Such a device also has the same operations and effects as those of the machining method of the present invention. In the invention, the phrase "working part" includes, for instance, a working surface or a surface to be machined on the workpiece.

When a mixture of cooling water and cutting liquid is supplied as liquid to the interior of a tool post in the machining method of the present invention, excellent cooling and lubricating effects are obtained. Moreover, when a mixture of cooling water and cutting liquid is passed through a liquid passage in the mist supplying apparatus of the present invention, cooling and lubricating effects are similarly superior.

### BRIEF DESCRIPTION OF THE DRAWING

FIG. 1 is a cross-sectional view showing one embodiment of a mist supplying apparatus according to the present invention;
FIG. 2 is a partial cross-sectional view of the mist supplying apparatus of FIG. 1;
FIG. 3 is a front view of the mist supplying apparatus of FIG. 1;
FIG. 4 is a rear elevation of the mist supplying apparatus of FIG. 1;
FIG. 5 is a perspective view showing the usage of the mist supplying apparatus of FIG. 1;
FIG. 6 is a plan view of a tool holder;
FIG. 7 is a front view of the tool holder of FIG. 6;
FIG. 8 is a side view of a bush;
FIG. 9 is a rear elevation of the bush of FIG. 8;
FIG. 10 is a cross-sectional view of the bush of FIG. 8;
FIG. 11 is a partial cross-sectional view of the bush of FIG. 8;
FIG. 12 is a side view of a chuck fixing member;

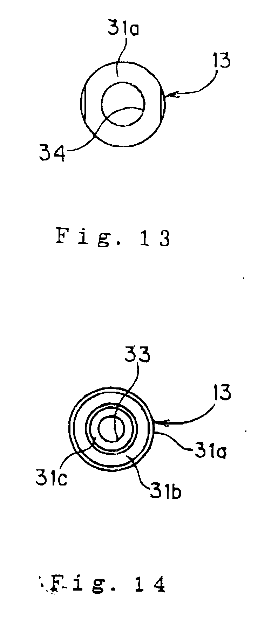

FIG. 13 is a rear elevation of the chuck fixing member of FIG. 12;

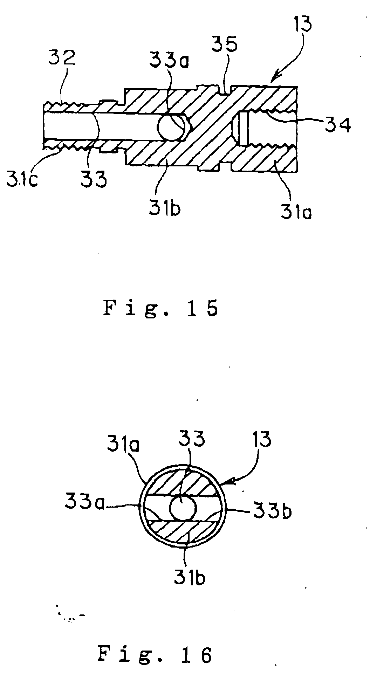

FIG. 14 is a front view of the chuck fixing member of FIG. 12;
FIG. 15 is a cross-sectional view of the chuck fixing member of FIG. 12;
FIG. 16 is a partial cross-sectional view of the chuck fixing member of FIG. 12;
FIG. 17 is an explanatory diagram of a lathe device; and
FIG. 18 is an explanatory diagram of a conventional cutting tool.

### DESCRIPTION OF THE PREFERRED EMBODIMENT

A preferred embodiment of the present invention will be explained along with the attached drawings.

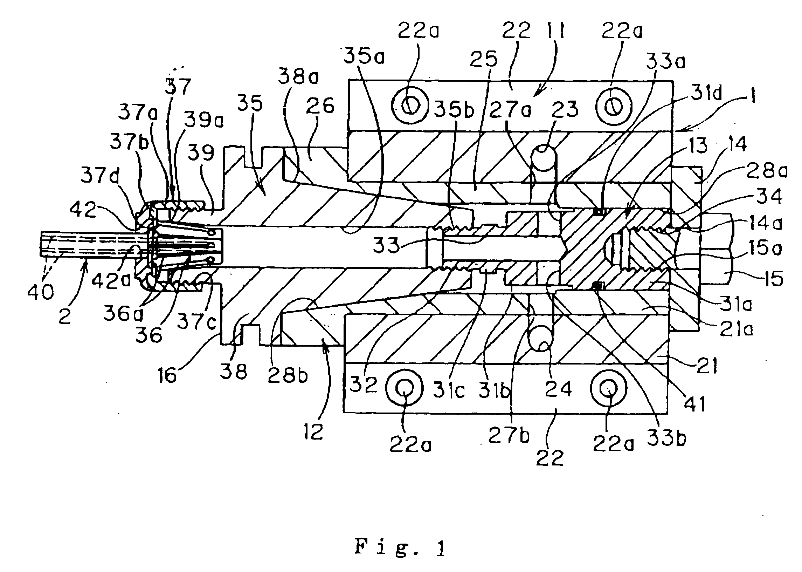

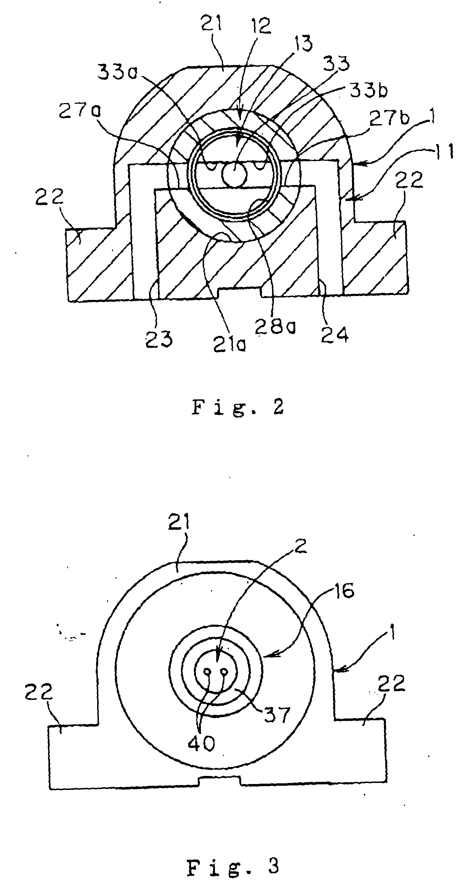

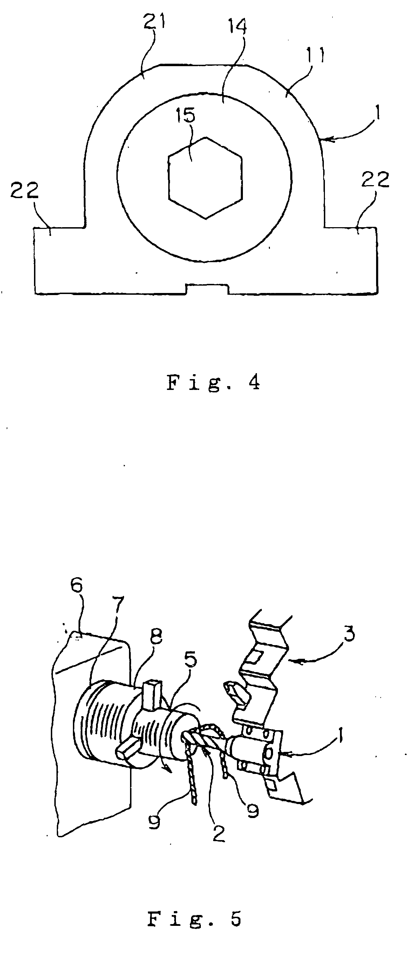

FIGs. 1 to 4 show an embodiment of a mist supplying apparatus of the present invention. In the figures, reference numeral 1 is a tool holding means, and 2 is a working tool (a drill in this embodiment) which is detachably fixed to the tool holding means 1. The tool holding means 1 includes a tool holder assembly 11 that is detachably fixed to a holder mounting surface of a turret 3 (tool post) as shown in FIG. 5, a bush 12 fixed to the tool holder assembly 11, a chuck fixing member 13 which is fitted inside the bush 12, a mounting plate 14 which is a doughnut-shaped disk, a mounting bolt 15 inserted through a center through-hole 14a of the mounting plate 14, and a working tool unit 16 which is used at a machining center. In FIG. 5, reference numeral 5 is a workpiece; 6 is a main spindle base; 7 is a main spindle; 8 is a chuck; and 9 is a cutting chip.

The holder mounting surface of the turret 3 has threaded holes (not shown in the figures) at corresponding locations to four bolt insertion holes 22a of a pair of fixing plate portions 22 as described later. The turret 3 internally has a compressed air passage (not shown in the figures) for receiving compressed air from a compressed air supplying means (not shown in the figures) which includes a motor, and the like, and a liquid passage (not shown in the figures) for receiving liquid which is a mixture of cooling water and lubricant in the embodiment from a liquid supplying means (not shown in the figures) which includes a motor which can be the same as the motor for the compressed air supplying means, and the like. One end of the compressed air passage of the turret 3 is linked to the compressed air supplying means, and the other end opens at the holder mounting surface corresponding to one end of a compressed air communication path 23 as described later. One end of the liquid passage is linked to the liquid supplying means, and the other end opens at the holder mounting surface corresponding to one end of a liquid communication path 24 as described later.

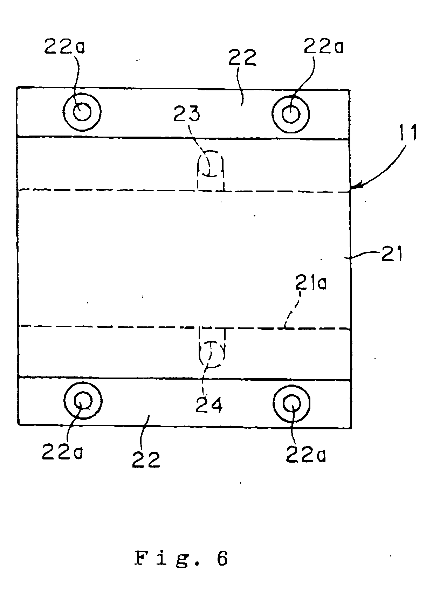

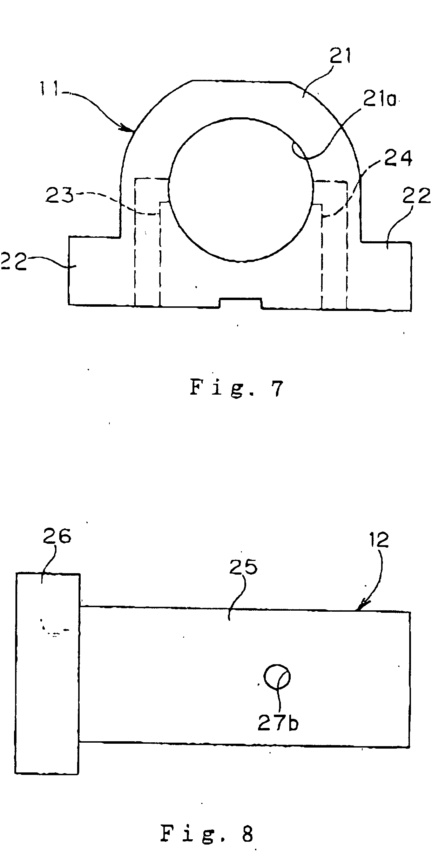

The tool holder assembly 11, as shown in FIGs. 6 and 7, has a holder portion 21 formed with a center through-hole 21a, and a pair of fixing plate portions 22 which protrude from the holder portion 21. Both fixing plate portions 22 are formed with two bolt insertion holes 22a, respectively. Four bolts (not shown in the figures) are respectively inserted through these four bolt insertion holes 22a, and are fastened at four threaded holes formed at the holder mounting surface of the turret 3.

The tool holder assembly 11 has a compressed air communication path (first communication path) 23 for passing compressed air, and a liquid communication path (second communication path) 24 for passing liquid. One end of the compressed air communication path 23 opens at a bottom surface (surface which faces the holder mounting surface) of the tool holder assembly 11 corresponding to the other end of the compressed air passage of the turret 3. Thus, the compressed air communication path 23 is linked to this compressed air passage. Moreover, the other end of the compressed air communication path 23 opens at the center through-hole 21a of the holder portion 21 corresponding to communication hole 12a of the bush 12 as described later. On the other hand, one end of the liquid communication path 24 opens at the bottom of the tool holder assembly 11 corresponding to the other end of the liquid passage of the turret 3. Thus, the liquid communication path 24 and this liquid passage are linked to each other. Moreover, the other end of the liquid communication path 24 opens at the center through-hole 21a of the holder portion 21 corresponding to the other communication hole 12a of the bush 12. The other ends of both communication paths 23 and 24 open so as to face each other.

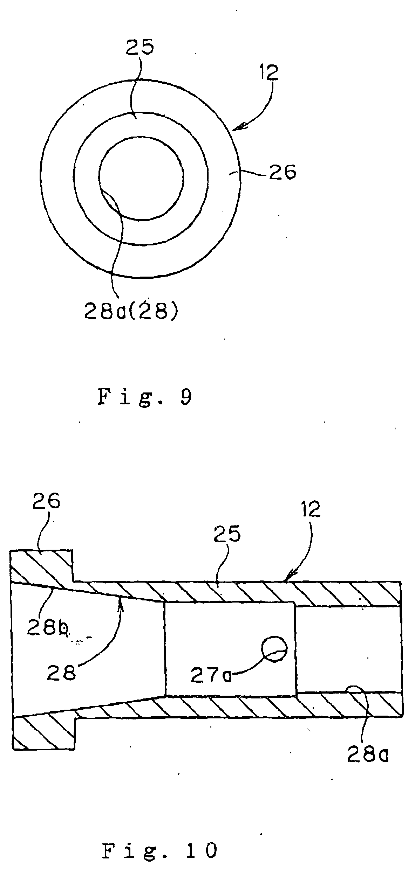

The bush 12 has a cylinder shape as shown in FIGs. 8 to 11. The bush 12 consists of a roughly cylindrical body portion 25 which is provided inside of the center through-hole 21a of the holder portion 21 of the tool holder assembly 11, and an annular collar portion 26 provided in a protruding condition at one end of the body portion 25. The body portion 25 is formed with two through-holes 27a and 27b. Through-hole 27a and through-hole 27b are formed at a corresponding part to the other end of the compressed air communication path 23 and at a corresponding part to the other end of the liquid communication path 24, respectively. Accordingly, through-hole 27a is linked to the compressed air communication path 23, and through-hole 27b is linked to the liquid communication path 24 (see FIG. 1).

The center through-hole 28 of the bush 12 consists of a stepped cylindrical hole 28a which extends from an end of the body portion 25 towards the inside adjacent the mounting plate 14, and a truncated cone-shaped tapered hole 28b having a gradually decreasing diameter from an end of the collar portion 26 towards the inside of the body portion 25. The chuck 35, mentioned later, is fitted to the inside of the tapered hole 28b.

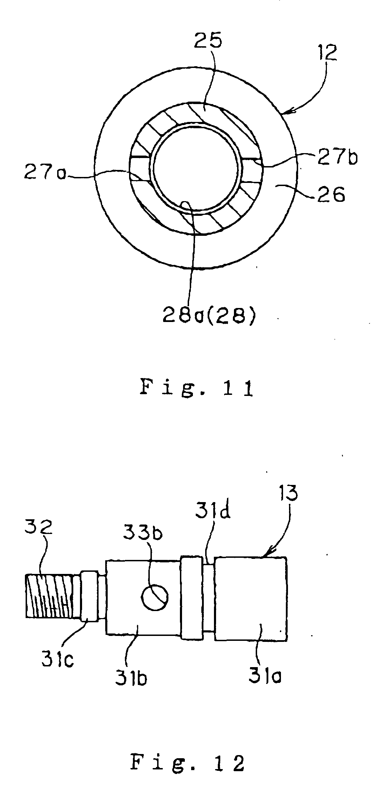

The chuck fixing member 13 consists of a large diameter portion 31a fitted to the inside of the stepped cylindrical hole 28a of the center through-hole 28 of the bush 12, a center portion 31b formed in a smaller diameter than the stepped cylindrical hole 28a, and a small diameter portion 31c having external screw threads 32 at the tip thereof. A screw portion 35b of the chuck 35 mentioned later is screwed on the screw threads 32 of the small diameter portion 31c. The center portion 31b and the small diameter portion 31c of the chuck fixing member 13 internally have a straight passage 33 which extends straight from an end of the small diameter portion 31c, and forked branch passages 33a and 33b which branch out from an end of the straight passage 33 towards the outer surface of the center portion 31b in mutually facing directions. Forked branch passage 33a opens at the outer surface of the center portion 31b corresponding to one through-hole 27a of the bush 12. Forked branch passage 33b opens at the outer surface of the center portion 31b corresponding to the other through-hole 27b of the bush 12. An end of the large diameter portion 31a has internal screw threads 34 that screw together with external screw threads 15a of the mounting bolt 15. In FIG. 12, reference numeral 31d indicates an O ring groove in large diameter portion 31a, and an O ring 41 (see FIG. 1) is externally fitted therein. Besides the O ring 41, a liquid leakage preventing means (not shown in the figures) is also provided at an appropriate location of the tool holding means 1.

A commercially available tool unit for a machining center is used as the working tool unit 16. The working tool unit 16 consists of a chuck 35, a collet 36, and a cap nut 37. The chuck 35 consists of a main body portion 38, and a cylindrical portion 39 protruding from one end of the main body portion 38. The outer surface of the main body portion 38 has a tapered surface 38a that can be fitted into the inside of the tapered hole 28b of the bush 12- External screw threads 39a, that are screwed together with a screw threads 37c of the cap nut 37, are formed at the outer surface of the cylindrical portion 39. The chuck 35 has a center through-hole 35a that passes through the main body 38 and the cylindrical portion 39. An end of the center through-hole 35a (the end on the side of the chuck fixing member 13) has internal screw threads 35b which are screwed together with screw threads 32 of the chuck fixing member 13.

The collet 36 has a plurality of slit-shaped splits 36a for decreasing the diameter thereof. Moreover, the cap nut 37 consists of a cylindrical side wall portion 37a which is externally fitted to the cylindrical portion 39 of the chuck 35, and a front wall portion 37b covering a front opening of the side wall portion 37a. An inner surface of the side wall portion 37a has screw threads 37c which are screwed together with screw threads 39a of the cylindrical portion 39 of the chuck 35. At the center of the front wall portion 37b of the cap nut 37, an engaging hole 37d is joined to the collet 36. In FIG. 1, reference numeral 42 indicates a cover, and 42a is an insertion hole of the working tool 2.

Two passages 40 internally pass through the working tool 2. In addition, a minute space is provided between the outer surface of the working tool 2 and the inner surface of the insertion hole 42a of the cover 42 of the collet 36 for supplying mist.

In operation of the above-noted structure, both motors of the compressed air supplying means and the liquid supplying means are driven. As a consequence, compressed air is supplied to the compressed air passage of the turret 3, and liquid is supplied to the liquid passage of the turret 3. Then, compressed air passes through the compressed air passage of the turret 3, the compressed air communication path 23 of the tool holder assembly 11, through-hole 27a of the bush 12, and the space between the bush 12 and the chuck fixing member 13. Then, the compressed air is introduced to forked branch passage 33a of the chuck fixing member 13. Moreover, liquid passes through the liquid passage of the turret 3, the liquid communication path 24 of the tool holder assembly 11, the through-hole 27b of the bush 12, and a space between the bush 12 and the chuck fixing member 13. Then, the liquid is introduced to the forked branch passage 33b of the chuck fixing member 13. The liquid is mixed with the introduced compressed air, and is atomized into fine particles by the compressed air to form a mist. Atomized mist passes through the straight passage 33 of the chuck fixing member 13, and a large portion thereof passes through both passages 40 of the working tool 2 and is sprayed onto a working part. Moreover, the remainder of the mist, that is, the mist which did not flow into both passages 40 of the working tool 2, passes through a space between the outer surface of the working tool 2 and the inner surface of the insertion hole 42a of the cover 42 of the collet 36, and is then sprayed along the outer surface of the working tool 2 from that space.

As described above, drilling can be carried out by the working tool unit 16 that is used at the machining center in the lathe device in the embodiment. Moreover, since the liquid which is a mixture of cooling water and cutting lubricant is atomized and sprayed onto the working part as a mist, excellent cooling and lubricating effects are realized. Moreover, since atomized mist is sprayed along the outer surface of the working tool 2 from a space between the outer surface of the working tool 2 and the inner surface of the passage hole 42a of the cover 42, the shoulder of the working tool 2 can be protected.

Although the working tool 2 has two passages 40 in the above embodiment, the number of the passages 40 may be one, or three or more. A working tool 2 having no passages 40 may also be used. In this latter situation, mist only is sprayed along the outer surface of the working tool 2 from a space between the outer surface of the working tool 2 and the inner surface of the passage hole 42a of the collet 36, and is thereby supplied to a working part.

Moreover, since cooling and lubricating effects are significantly different depending on the kinds of mist, the mixing ratio of cooling water and cutting lubricant of the liquid supplied from the liquid supplying means can be varied in accordance with specific machining conditions. For instance, in the case of high-speed cutting, the ratio of cooling water, among the cooling water and cutting lubricant, may be increased by supplying more water so as to enhance cooling effects. In the cases of low- and mid-speed cutting, the ratio of cutting lubricant may be increased by supplying more cutting lubricant so as to increase lubricating effects.

Furthermore, although tap water is used as cooling water in the embodiment, the cooling water is not limited to such water. Pure water or ultrapure water may be used instead, for example. As cutting lubricant, various types, including Bluebe #LB-1 manufactured by US ITW Corporation, may be used. Although a mixture of cooling water and cutting lubricant is used as liquid in the above embodiment, either one of them may be used alone, if desired.

In the described embodiment, the mixture of cooling water and cutting lubricant is supplied as a liquid. However, cooling water and cutting lubricant may be supplied separately to the chuck fixing member 13.

In summary, the machining method of the present invention is a machining method used with a lathe device. In machining a workpiece with a lathe device, compressed air and liquid are separately supplied to the interior of a tool post. After the compressed air and the liquid are passed separately through the interior of the tool post, they are separately supplied to the interior of a tool holding means that is fixed to the tool post. Then, the compressed air and the liquid are mixed and atomized inside the tool holding means to produce a mist. The resultant mist is delivered to a tip of the tool along the outer surface or within the interior of the tool. During machining, the mist is sprayed onto a working part from the tip of the tool. Thus, when liquid is atomized and supplied to the working part, the mist can be sprayed with certainty, even to a narrow space of the working part, and heating at the working part can be prevented as well. Accordingly, even if high-speed machining is performed, heating at the working part can be prevented. High-speed machining thus can be performed with a tool for a machining center in a lathe device. On the other hand, the mist supplying apparatus of the present invention is a mist supplying apparatus used with a lathe device, and the device has the same operations and effects as those of the machining method of the present invention.

When a mixture of cooling water and cutting liquid is supplied to the interior of a tool post as liquid in the machining method of the present invention, excellent cooling and lubricating effects are obtained. Moreover, the resultant cooling and lubricating effects are similarly excellent when a mixture of cooling water and cutting liquid is passed through a liquid passage in the mist supplying apparatus of the present invention.

## Claims

1. A machining method comprising the steps of:
separately supplying compressed air and liquid to an interior of a tool post of a lathe device when machining a workpiece with the lathe device;
individually passing the compressed air and the liquid through the interior of the tool post and then separately supplying the compressed air and the liquid to an interior of a tool holding means fixed to the tool post;
mixing and then atomizing the compressed air and the liquid inside the tool holding means;
delivering atomized mist to a tip of a tool along an outer surface or within an interior of the tool; and
spraying the mist from the tip of the tool to a working part of the workpiece.

2. The machining method according to Claim 1, wherein a mixture of cooling water and cutting liquid is supplied as liquid to the interior of the tool post.

3. A mist supplying apparatus for a lathe device comprising a tool post, a tool holding means fixed to the tool post, and a tool which is detachably fixed to the tool holding means; wherein the tool post internally and Individually has a compressed air passage for receiving compressed air from a compressed air supplying means, and a liquid passage for receiving liquid from a liquid supplying means, and wherein the tool holding means internally and individually has a first communication path linked to the compressed air passage, a second communication path linked to the liquid passage, and a convergence path into which communication paths converge, thereby atomizing, at the convergence path, liquid supplied from the second communication path by compressed air from the second communication path, and delivering atomized mist to a tip of a tool along an outer surface or within an interior of the tool and then spraying the mist from the tip of the tool.

4. The mist supplying apparatus according to Claim 3, wherein the liquid supplying means is arranged to supply a mixture of cooling water and cutting liquid.
